**Europäisches Patentamt**

**European Patent Office**

**Office européen des brevets**

(11) Veröffentlichungsnummer: **0 336 237**
**A2**

(12) **EUROPÄISCHE PATENTANMELDUNG**

(21) Anmeldenummer: **89105284.7**

(51) Int. Cl.4: **G11B 11/10**

(22) Anmeldetag: **23.03.89**

(30) Priorität: **05.04.88 DE 3811374**

(43) Veröffentlichungstag der Anmeldung:
**11.10.89 Patentblatt 89/41**

(84) Benannte Vertragsstaaten:
**DE FR GB IT NL**

(71) Anmelder: **Siemens Aktiengesellschaft**
**Wittelsbacherplatz 2**
**D-8000 München 2(DE)**

(72) Erfinder: **van den Berg, Hugo, Dr.**
**Dr. Dassler-Strasse 4**
**D-8522 Herzogenaurach(DE)**

(54) **Datenspeichersystem und Verfahren zu seiner Herstellung.**

(57) Das Datenspeichersystem mit thermisch direkt
überschreibbarer Information ist mit einer Mehrschichtstruktur versehen, die eine Speicherschicht
und eine Steuerschicht zur Magnetisierung der Speicherschicht enthält. Erfindungsgemäß ist mindestens
eine Steuerschicht (6) mit von der Speicherschicht
(2) abweichender Wärmeleitung vorgesehen, deren
Magnetisierung parallel zu ihren Flachseiten in der
Bewegungsrichtung v der Mehrschichtstruktur (1)
verläuft. Die Speicherschicht (2) hat ein oder mehrere Untergitter mit vorbestimmter Dipolverteilung, deren Richtung durch das Magnetfeld der Steuerschicht (6) veränderbar ist. In dieser Ausführungsform erhält man ein Datenspeichersystem mit hohem Signal-Rauschverhältnis und direkt überschreibbarer Information.

FIG 1

FIG 4

FIG 5

## Datenspeichersystem und Verfahren zu seiner Herstellung

Die Erfindung bezieht sich auf ein Datenspeichersystem mit thermisch direkt überschreibbarer Information, bei dem das Einschreiben, Auslesen und Löschen der Information durch fokussierbare und in Wärmeenergie umwandelbare Strahlung mit steuerbarer Intensität in Bereichen mit veränderbarer Magnetisierungsrichtung erfolgt. Das Speichersystem enthält eine Mehrschichtstruktur mit einer magnetischen Speicherschicht und einer magnetischen Steuerschicht. Diese Steuerschicht dient als Feldquelle für die Steuerung der Magnetisierung in der Speicherschicht.

In magnetooptischen Speichersystemen kann bekanntlich eine Information mit einem fokussierten Strahlungsimpuls, der in Wärme umgesetzt wird, vorzugsweise einem Laserstrahl, in ein Speichermedium eingeschrieben werden, dessen Koerzitivfeldstärke mit steigender Temperatur abnimmt. Das im allgemeinen als magnetooptische Dünnschicht gestaltete Speichermedium hat seine bevorzugte magnetische Achse senkrecht zu den Flachseiten der Speicherschicht. Durch den fokussierten Laserstrahl wird das magnetooptische Speichermedium in vorbestimmten Bereichen etwa die Ordnungstemperatur, die sogenannte Curie-Temperatur, bei der eine vorbestimmte Magnetisierung durch ein äußeres Magnetfeld in den entstehenden Domänen eingestellt werden kann. Das Muster der Magnetisierung in den Domänen stellt die als binäre Daten gespeicherte Information dar. Zum Auslesen der Daten wird ein Laserstrahl geringer Intensität über einen Polarisator zugeführt. Die Polarisation des Lichtstrahls wird um einen vorbestimmten Winkel gedreht, wenn der Lichtstrahl von der Speicherschicht reflektiert wird (Kerr-Effekt) oder wenn er durch die Speicherschicht hindurchtritt (Faraday-Effekt). Die Größe des Drehwinkels wird wesentlich bestimmt durch die Eigenschaften des Speichermediums. In Abhängigkeit von der Magnetisierungsrichtung in den Domänen wird die Polarisationsebene im Uhrzeigersinn oder gegen den Uhrzeigersinn gedreht. Durch einen Analysator wird die Änderung der Polarisation umgewandelt in eine Änderung der Intensität des Lichtstrahls, die von einem Photodetektor registriert werden kann. Durch Anzeige der Drehung kann die Information aus dem Speicher wieder ausgelesen werden.

Zum Überschreiben einer eingeschriebenen Information kann beispielsweise während einer Umdrehung der Speicherplatte die eingeschriebene Information mit einem Laserstrahl gelöscht und während der folgenden Umdrehung eine neue Information eingeschrieben werden. Ferner kann in einem Zweistrahlsystem mit einem Wärmestrahl gelöscht und mit dem nachfolgenden Strahl neu eingeschrieben werden.

Bei einem weiteren bekannten Datenspeichersystem mit einer Speicherschicht, einem Dielektrikum und einer Steuerschicht wird zum Überschreiben die Magnetisierung nur in denjenigen Domänen umgewandelt, in die eine neue Information eingeschrieben werden soll. Die Steuerschicht dient zum Erzeugen eines magnetischen Grundfeldes. Sie besteht aus ferrimagnetischem Material mit in Abhängigkeit von der Temperatur wechselnder Magnetisierung. Lesen und Überschreiben erfolgt in getrennten magnetischen Bereichen mit einem Zweistrahl-Lasersystem. Durch den Laserstrahl werden sowohl die Speicherschicht als auch die Steuerschicht erwärmt. Wird die Steuerschicht über ihren Kompensationspunkt $T_K$ erwärmt, so wird ihre Magnetisierungsrichtung umgedreht und zugleich erhöht. Beim Erreichen der Curie-Temperatur $T_c$ der Speicherschicht wird diese Schicht schreibfähig und ihre Magnetisierung stellt sich parallel zur Magnetisierung in der Steuerschicht. Beim Abkühlen wird unterhalb der Kompensationstemperatur $T_K$ der Steuerschicht die Magnetisierung umgedreht und ist dann der Magnetisierung in der Spei cherschicht entgegengerichtet. Die Magnetisierung in der Steuerschicht wird umgewandelt durch magnetostatische Wechselwirkung. Die Koerzitivfeldstärken der beiden Schichten müssen somit aufeinander abgestimmt sein, damit die Magnetisierung in der Steuerschicht durch magnetostatische Wechselwirkung umgedreht werden kann, während die Magnetisierung in der Speicherschicht unverändert bleibt (US-PS 4 649 519).

Ein bekanntes Datenspeichersystem mit thermisch direkt überschreibbarer Information enthält eine Mehrschichtstruktur als Datenträger, dessen Speicherschicht von einer Steuerschicht durch eine Isolierschicht getrennt ist, die zur Steuerung der Temperatur in der Steuerschicht dient. Zum Einschreiben, Auslesen und Löschen dient ein Laserstrahl mit steuerbarer Intensität. Die Steuerschicht erzeugt ein magnetisches Steuerfeld und damit eine magnetische Feldorientierung in der Speicherschicht als Funktion der Temperatur. Zum Einschreiben eines O-Signals wird durch einen Laserstrahl geringer zeitlicher Länge nur die Speicherschicht aufgeheizt und durch zum Beispiel eine über dem Datenträger angeordnete Grundfeldquelle die O-Magnetisierung in die Speicherschicht eingeschrieben. Zum Einschreiben eines I-Signals wird durch einen längeren Laserimpuls auch die Steuerschicht aufgeheizt und das Ladungsmuster in der Steuerschicht geändert. Der geänderte Feldverlauf wird auf die Speicherschicht übertragen. In dieser Ausführungsform hat jedoch aus Ladungsmuster der Steuerschicht nur eine verhältnismäßig geringe magnetisierende Wirkung auf die Speicherschicht. Die Dicke der Steuerschicht muß verhältnismäßig groß gewählt werden, damit der Dipol-Charakter der Ladungen verschwindet. Außerdem besitzen die Materialien mit dieser relativ hohen Kompensationstemperatur wegen der entgegengesetzt gerichteten Magnetisierungen in beiden Untergittern eine relativ niedrige Gesamtmagnetisierung. Dementsprechend können nur kleine Felder in der Speicherschicht erzeugt werden (Europäische Offenlegungsschrift 0 217 096).

Ein weiteres bekanntes Datenspeichersystem, bei dem das Einschreiben, Auslesen und Löschen der Information durch fokussierbare und in Wärmeenergie umwandelbare Strahlung erfolgt, enthält eine Mehrschichtstruktur mit einer magnetischen Speicherschicht als Datenträger und einer Steuerschicht zum Überschreiben einer gespeicherten Information. Zum Einschreiben der Information dient ein Laser mit steuerbarer Intensität. Die Steuerschicht hat eine senkrecht Magnetisierung und eine relativ geringe Koerzitivfeldstärke bei Raumtemperatur. Ein starkes Initialisierungsfeld wird vor der Aufzeichnung bei Raumtemperatur an die Steuerschicht angelegt und sorgt für eine Magnetisierung in gleicher Richtung. Zum Überschreiben wird ein Laserstrahl mit Impulsmodulation auf die Mehrschichtstruktur gerichtet und die Temperatur so weit erhöht, daß die Magnetisierung in beiden Schichten verschwindet. Damit wird ein Bit in die Steuerschicht eingeschrieben und bei der Abkühlung durch magnetische Austauschkopplung oder magnetostatische Kopplung auf die Speicherschicht übertragen. Mit einem niedrigen Pegel des Laserstrahls, mit dem die Mehrschichtstruktur nur unterhalb der Curie-Temperatur der Steuerschicht erwärmt wird, bleibt die Magnetisierung der Steuerschicht unverändert und in die Speicherschicht wird ein anderes Bit eingeschrieben werden. Die Initialisierung und Einschreibung erfolgt in getrennten Bereichen. Im Initialisierungsbereich der Steuerschicht wird die Information wieder gelöscht, damit sie im Schreibbereich wieder neu eingeschrieben werden kann. In dieser Ausführungsform des Datenspeichersystems ist ein Initialisierungsfeld erforderlich, das in der Steuerschicht die eingeschriebenen Daten löscht und zugleich die Daten in der Speicherschicht nicht verändert. Die eingeschriebenen magnetischen Domänen sind stabil durch magnetische Wandreibung (wall friction). Man braucht deshalb als Speicherschicht ein Material mit hoher Koerzitivfeldstärke, damit ein Wandkriechen vermieden werden kann und zugleich müssen hohe Ansprüche an die Homogenität der Speicherschicht und die Gerätetemperatur gestellt werden (DE-OS 36 19 618).

Der Erfindung liegt nun die Aufgabe zugrunde, dieses bekannte Datenspeichersystem zu vereinfachen und zu verbessern, insbesondere soll das Signal-Rauschverhältnis erhöht werden.

Die Erfindung beruht nun auf der Erkenntnis, daß zum Einschreiben stabiler magnetischer Bereiche in der Speicherschicht unterschiedliche Temperaturgradienten in der Steuerschicht und der Speicherschicht herangezogen werden können, und sie besteht in den kennzeichnenden Merkmalen des Anspruchs 1. Durch die unterschiedlichen Temperaturgradienten wird beim Einschreiben eines I-Signals die Magnetisierung in der Steuerschicht geändert und ein Ladungsmuster erzeugt, dessen magnetisches Feld zur Speicherschicht durchgreift und die Dipolorientierung in der Speicherschicht steuert. Diese Dipolorientierung innerhalb der Steuerschicht liegt in der Bewegungsrichtung der Mehrschichtstruktur im Schreibbereich.

Es wird eine Strahlung mit steuerbarer Intensität, vorzugsweise ein Laserstrahl, verwendet, der zusätzlich beispielsweise in drei Stufen steuerbar sein kann. Zum Auslesen der Information ist nur eine verhältnismäßig geringe Laserleistung erforderlich. Zum Einschreiben eines Null-Signals ohne vorheriges Löschen einer gegebenenfalls bereits eingeschriebenen Information wird die Laserleistung so weit erhöht, daß die Speicherschicht oberhalb ihrer kritischen Temperatur $T_{Kr2}$ erwärmt wird und beim Abkühlen der Ortsbereich der Speicherschicht mit der kritischen Temperatur $T_{Kr2}$ außerhalb des Ladungsfensters in der Steuerschicht liegt. Die O-Information wird am Rande des schreibfähigen Bereiches, wo die Speicherschicht unter die kritische Temperatur $T_{Kr2}$ abkühlt, durch ein äußeres Feld eingeschrieben.

Beim Einschreiben eines I-Signals wird durch eine Änderung der eingestrahlten Laserleistung das Ladungsfenster in der Steuerschicht derart verschoben, daß der Ortsbereich der Speicher schicht, in dem die Temperatur unter die kritische Temperatur abklingt, im Ladungsfenster der Steuerschicht liegt.

Zur weiteren Erläuterung der Erfindung wird auf die Zeichnung Bezug genommen, in deren Figur 1 eine Mehrschichtstruktur gemäß der Erfindung schematisch veranschaulicht ist. Figur 2 zeigt die Magnetisierungskennlinie eines Materials der Steuerschicht und in Figur 3 sind die Temperaturgradienten veranschaulicht. In Figur 4 ist der Temperaturverlauf in der Steuerschicht und in Figur 5 der Temperaturverlauf in der Speicherschicht beim Einschreiben einer Information dargestellt. In den Figuren 6 und 7 ist jeweils eine besondere Ausführungsform der Mehrschichtstruktur mit wenigstens einer besonderen Wärmeverteilungsschicht veranschaulicht. Figur 8 zeigt den Temperaturverlauf der Steuerschicht in einem Diagramm beim Einschreiben eines O-Signals und Figur 9 den Temperaturverlauf dieser Schicht beim Einschreiben eines I-Signals. In Figur 10 sind die Ladungsdichte und die vertikale Komponente des Magnetfeldes der Steuerschicht in einem Diagramm dargestellt. Figur 11 zeigt eine Magnetisierungskennlinie der Steuerschicht. In Figur 12 ist der Temperaturverlauf der Speicherschicht und in Figur 13 die Magnetisierung und die Ladung der Steuerschicht jeweils beim Einschreiben eines O-Signals und in den Figuren 14 und 15 beim Einschreiben eines I-Signals veranschaulicht. Figur 16 zeigt die Änderung der Magnetisierung in der Steuerschicht. In Figur 17 ist die Magnetisierungskennlinie für ein besonderes Material der Steuerschicht veranschaulicht. Eine besondere Ausführungsform mit einer Rillenstruktur ist in Figur 18 dargestellt.

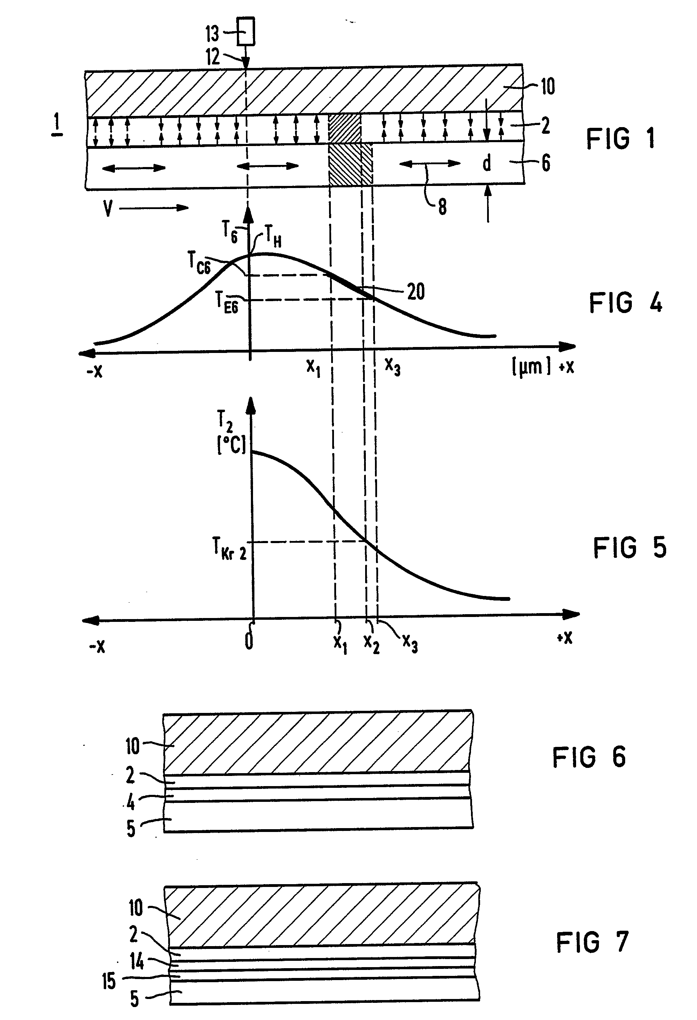

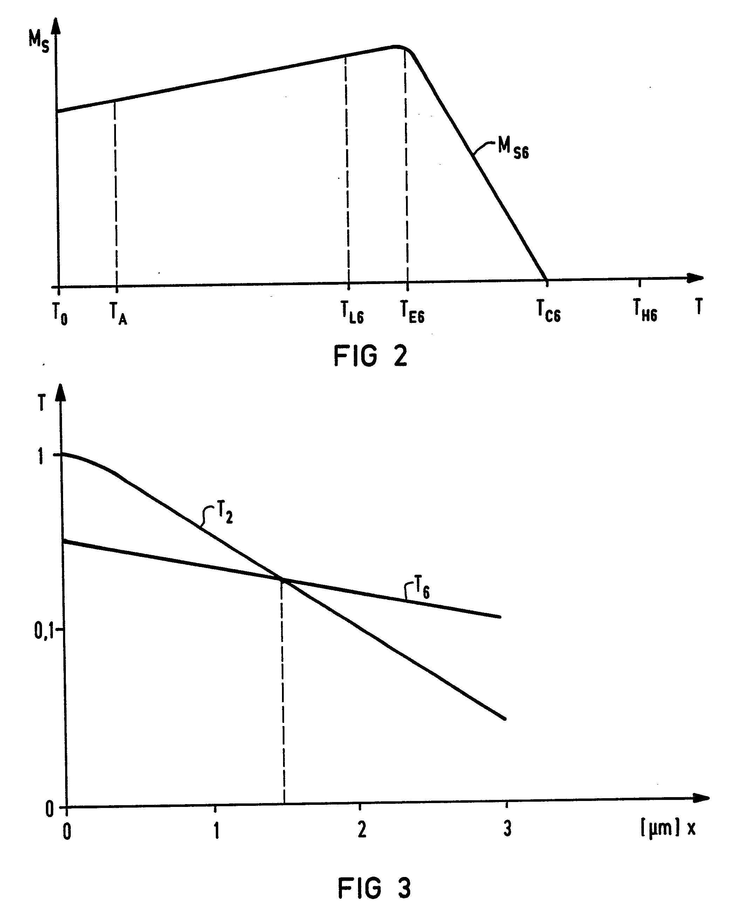

Gemäß Figur 1 enthält ein Datenspeichersystem eine Mehrschichtstruktur 1 mit drei Schichten. Eine Speicherschicht 2 mit einer Dicke von beispielsweise etwa 70 nm, die beispielsweise aus Terbium-Eisen-Kobalt TbFeCo, vorzugsweise aus Ytterbium-Terbium-Eisen-Kobalt YbTbFeCo, bestehen kann, ist zur Datenspei cherung vorgesehen. Die Steuerschicht 6 dient zugleich zur Steuerung der Wärmediffusion. Die Steuerschicht 6 kann vorzugsweise aus Samarium-Kobalt SmCo oder auch aus Terbium-Eisen-Kobalt TbFeCo sowie aus Ytterbium-Terbium-Eisen-Kobalt YbTbFeCo bestehen, dessen magnetische Anisotropie-Achse 8 in der durch Doppelpfeile angedeuteten beidseitigen parallel zur Richtung der Flachseiten und Richtung der Bewegung v der Speicherplatte verläuft. Diese Richtung der leichten magnetischen Achse erhält man in einfacher Weise durch ein starkes angelegtes magnetisches Feld von beispielsweise etwa 0,2 T bei der Herstellung der Steuerschicht 6 durch Abscheidung auf der Speicherschicht 2. Material und Dicke der Steuerschicht 6 sind wesentlich für die Bestimmung der Temperaturgradienten und die Stabilisierung der eingeschriebenen Information in der Speicherschicht 2. Ein großes Magnetfeld erhält man mit einer verhältnismäßig großen Dicke der Steuerschicht. Die Dicke der Steuerschicht 6 wird wesentlich bestimmt durch die Sättigungsmagnetisierung. Sie wird im allgemeinen wenigstens 200 Å betragen, vorzugsweise zwischen 1000 und 2000 Å gewählt und im allgemeinen 10000 Å nicht wesentlich überschreiten. Die Speicherschicht 2 ist auf einem Substrat 10 angeordnet, das vorzugsweise für einen Laserstrahl 12 durchlässig ist und beispielsweise aus Glas bestehen kann. Der kontinuierlich und zusätzlich beispielsweise stufenweise steuerbare Laserstrahl 12 wird von einer Strahlungsquelle 13 vorgegeben, die im allgemeinen ruht, während die Mehrschichtstruktur 1 mit der Geschwindigkeit v bewegt wird.

Gemäß dem Diagramm der Figur 2, in dem die Sättigungsmagnetisierung $M_S$ der Steuerschicht 6 über der Temperatur T aufgetragen ist, kann für die Steuerschicht 6 vorzugsweise ein Material gewählt werden, dessen Magnetisierungskennlinie $M_{S6}$ einen deutlichen Steigungsunterschied hat. Bis zu einer vorbestimmten Knicktemperatur $T_{E6}$ (edge) verläuft die Kennlinie mit einem geringen Anstieg und fällt dann nach einem Knick steil ab. Diese Eigenschaft hat beispielsweise Samarium-Kobalt SmCo. In der Magnetisierungskennlinie $M_{S6}$ liegen die Raumtemperatur $T_A$ (ambient) und die zum Einschreiben eines O-Signals erforderliche, beispielsweise verhältnismäßig tiefe Temperatur $T_{L6}$ - (low) noch im Bereich mit nahezu konstanter Sättigungsmagnetisierung $M_{S6}$. Bei der Knicktemperatur $T_{E6}$ erhält man den Knick in der Kennlinie und die Sättigungsmagnetisierung $M_S$ fällt steil ab bis zur Curie-Temperatur $T_{c6}$. Die höhere Temperatur $T_H$ - (high) zum Einschreiben eines I-Signals in der Speicherschicht 2 liegt oberhalb der Curie-Temperatur $T_{c6}$ der Steuerschicht 6.

In Figur 3 ist die Temperatur T in einem vorbestimmten örtlichen Bereich der Mehrschichtstruktur 1 beim Einschreiben einer Information in Abhängigkeit von ihrem Abstand x von der auftreffenden Laserstrahlachse entlang einer Datenspur auf einer Speicherplatte in einem Diagramm veranschaulicht. Die Temperatur T ist in logarithmischem Maßstab und in normierten Werten aufgetragen. Die Temperaturgradienten sind unterschiedlich. Der Temperaturgradient der Temperatur $T_2$ in der Speicherschicht 2 ist beispielsweise wesentlich steiler als der Temperaturgradient der Temperatur $T_6$ in der Steuerschicht 6. Dies hat zur Folge, daß nach Ablauf einer vorbestimmten Zeit nach dem Einstrahlen des Lasers im Bereich der Abkühlung beispielsweise im Abstand x von etwa 1 1/2 bis 3 $\mu$m die Temperatur $T_6$ in der Steuerschicht 6 höher ist als die Temperatur $T_2$ in der Speicherschicht 2.

Im Diagramm der Figur 4 ist der Temperaturverlauf $T_6$ in der Steuerschicht 6 über dem Abstand x vom auftreffenden Laserstrahl 12 einer Strahlungsquelle 14 an der Stelle x = 0 aufgetragen. Die Steuerschicht 6 soll beispielsweise beim Einschreiben eines I-Signals auf eine hohe Temperatur $T_H$ von beispielsweise etwa 150 °C erwärmt werden. Mit der Bewegung der Speicherplatte ist der aufgeheizte Bereich im Abstand $x_1$ auf die Curie-Temperatur $T_{c6}$ der Steuerschicht 6 und beim Abstand $x_3$ auf die Knicktemperatur $T_{E6}$ abgekühlt. In diesem Ortsbereich von $x_1$ bis $x_3$ wird ein Ladungsfenster 20 gebildet, dessen Feld zur Speicherschicht 2 durchgreift und dessen vertikale Komponente $H_{v6}$ wirksam ist und die endgültige Magnetisierungsverteilung in der Speicherschicht 2 einprägt.

Im Diagramm gemäß Figur 5 ist der Verlauf der Temperatur $T_2$ der Speicherschicht 2 über dem Abstand x vom Laserstrahl 12 aufgetragen.

Mit der Bewegung v der Mehrschichtstruktur 1 in Richtung +x ist die Speicherplatte 2 im Bereich des Ladungsfensters 20 zwischen $x_1$ und $x_3$ auf ihre kritische Temperatur $T_{Kr2}$ abgekühlt und im Abstand $x_2$ vom auftreffenden Laserstrahl 12 wird die durch das Feld der Steuerschicht 6 eingeprägte Magnetisierung in der Speicherschicht 2 fixiert.

In einer besonderen Ausführungsform des Datenspeichersystems gemäß Figur 6 ist die Steuerschicht aufgeteilt in eine Magnetschicht 5 und eine besondere Wärmeverteilungsschicht 4, die zwischen der Speicherschicht 2 und der Magnetschicht 5 angeordnet ist. Ihr Material und ihre Dicke werden so gewählt, daß die Wärmeübertragung zur Magnetschicht 5 eine vorbestimmte Temperaturverteilung in dieser Magnetschicht 5 ergibt. Sie kann vorzugsweise aus Selen Se oder einem gut wärmeleitenden Metall, insbesondere Kupfer Cu oder Aluminium Al, bestehen. Ferner ist beispielsweise Aluminiumnitrid $Al_3N_4$ geeignet. Die Magnetschicht 5 besteht aus einem Material mit hoher Magnetisierung und einem Gütefaktor Q, der vorzugsweise wenigstens 0,1 betragen kann. Gut geeignet ist beispielsweise Samarium-Cobalt.

Eine besonders vorteilhafte weitere Ausgestaltung des Magnetspeichersystems gemäß der Erfindung erhält man dadurch, daß zwischen der Speicherschicht 2 und der Magnetschicht 5 gemäß Figur 7 eine Wärmeverteilungsschicht vorgesehen ist, die aus einer Doppelschicht besteht. In dieser Ausführungsform ist für die Wärmediffusion in senkrechter Richtung eine Wärmeleitschicht 14, beispielsweise aus Selen Se, und für die laterale Wärmeverteilung eine Verteilungsschicht 15 vorgesehen, die aus gut wärmeleitendem und nichtmagnetischem Material, vorzugsweise aus Metall, insbesondere aus Kupfer, bestehen kann.

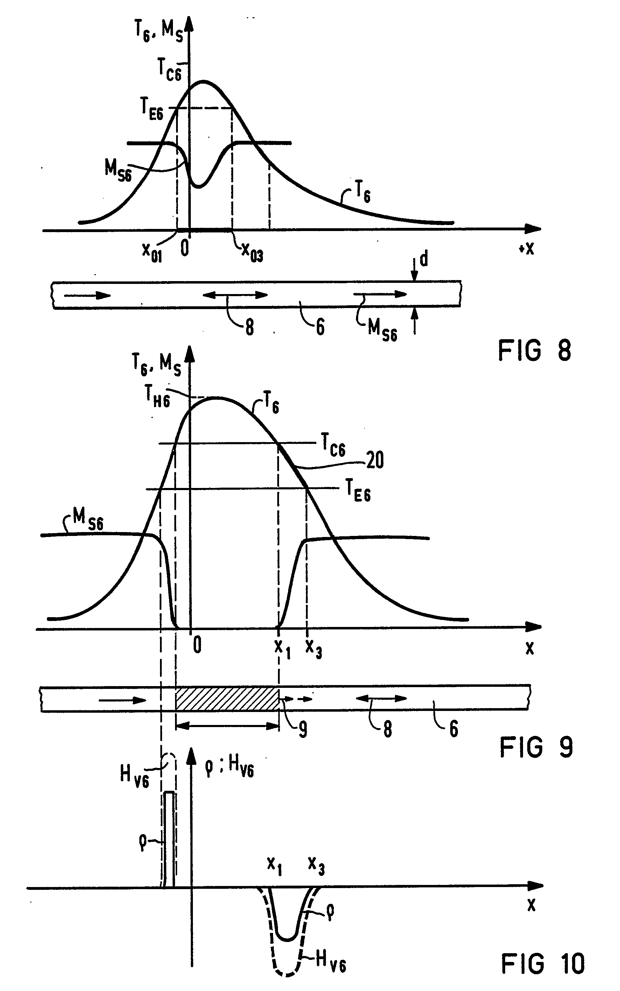

Zum kontinuierlichen Einschreiben eines O-Signals wird gemäß Figur 8, in dem die Temperatur T und die Sättigungsmagnetisierung $M_s$ der Steuerschicht 6 in Abhängigkeit vom Abstand x vom einfallenden Laserstrahl in einem Diagramm aufgetragen sind, die Steuerschicht 6 bis auf die Temperatur $T_L$ von beispielsweise 150°C erwärmt.

Gemäß dem Temperaturverlauf $T_6$ fällt die Temperatur im Abkühlbereich in der Bewegungsrichtung etwa nach einer e-Funktion ab. Durch die Bewegung v und die laterale Wärmediffusion ergibt sich ein etwas flacherer Abfall der Kennlinie in der Bewegungsrichtung x. Ein Ladungsfenster ergibt sich im Abstand $x_{01}$ bis $x_{03}$ vom Laserstrahl. Der Ort, an dem die Speicherschicht 2 während der Abkühlung ihre kritische Temperatur $T_{Kr2}$ durchläuft, liegt außerhalb dieses Ladungsfensters von $x_{01}$ bis $x_{03}$. Die Magnetisierung $M_{s6}$ ändert sich gemäß dem Diagramm der Figur 2 im Ladungsfenster entsprechend. Das O-Signal wird durch eine in der Figur nicht dargestellte äußere Feldquelle eingeschrieben.

Zum kontinuierlichen Einschreiben eines I-Signals wird die Steuerschicht 6 gemäß dem Diagramm der Figur 9, in dem ebenfalls die Sättigungsmagnetisierung $M_s$ und die Temperatur T über dem Abstand x aufgetragen sind, durch den Laserstrahl 12 über die Temperatur $T_{E6}$ und die Curie-Temperatur $T_{c6}$ auf die hohe Temperatur $T_{H6}$ erwärmt. Die Abkühlung in der Bewegungsrichtung erfolgt etwa gemäß einer e-Funktion. Oberhalb der Temperatur $T_{E6}$ fällt die Magnetisierung $M_{s6}$ bis zur Curie-Temperatur $T_{c6}$ auf Null ab. Bei der Temperatur $T_{H6}$ ist gemäß Figur 2 die Magnetisierung $M_{S6}$ Null und steigt dann bei der Abkühlung im Abstand $x_1$ bis $x_3$ im Ladungsfenster 20 von der Curie-Temperatur $T_{c6}$ bis zur Temperatur $T_{E6}$ auf ihren Maximalwert an. Ein Teil der Steuerschicht 6, der sich auf einer Temperatur T oberhalb der Curie-Temperatur $T_{c6}$ befindet, ist paramagnetisch, was in Figur 9 durch eine Schraffur angedeutet ist. Damit ändert sich am Rand dieses schraffierten Bereiches die Magnetisierung 9 gegenüber der ursprünglichen Magnetisierung 8 in der Steuerschicht 6.

Im Diagramm der Figur 10 ist die Ladungsdichte $\rho$ und die vertikale Komponente des Magnetfeldes $H_{v6}$ über dem Abstand x von dem einfallenden Laserstrahl 12 aufgetragen. Gemäß diesem Diagramm wird links von der Ordinate durch die Änderung der Magnetisierung $M_{s6}$ im Temperaturbereich zwischen der Temperatur $T_{E6}$ und der Curie-Temperatur $T_{c6}$ eine Ladung $\rho$ mit einem vorbestimmten Vorzeichen induziert, die ein entsprechendes Magnetfeld zur Folge hat, deren vertikale Komponent $H_{v6}$ in der Figur gestrichelt angedeutet ist. Diese Feldkomponente bleibt für das Einschreiben eines Signals in der Speicherschicht 2 ohne Bedeutung. Durch den Anstieg der Magnetisierung $M_{S6}$ am Ort $x_1$ wird eine Ladung $\rho$ mit entgegengesetzter Polung induziert. Die senkrechte Komponente des entsprechenden Magnetfeldes $H_{v6}$ greift bis zur Speicherschicht 2 durch und bestimmt in diesem Ortsbereich der Speicherschicht die Magnetisierung, so daß ein 1-Signal eingeschrieben werden kann.

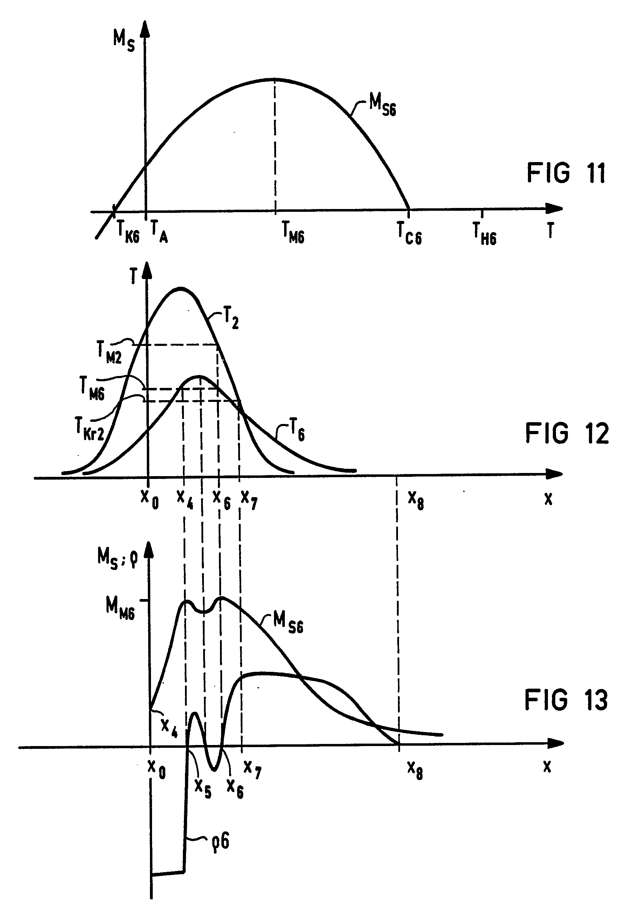

In einer besonderen Ausführungsform des Speichersystems kann gemäß Figur 11 für die Steuerschicht 6 ein Material gewählt werden, dessen Kompensationstemperatur $T_K$ dicht unterhalb der Raumtemperatur $T_A$ liegt. Bei der Kompensationstemperatur $T_K$ heben sich die Magnetisierungen der beiden Untergitter auf, die Dipole sind alle gegeneinandergerichtet und haben gleiche Größe. Oberhalb der Kompensationstemperatur $T_{6K}$ der Steuerschicht 6 steigt die Magnetisierung $M_{S6}$ gemäß dem Diagramm der Figur 11, in dem die Magnetisierung $M_S$ über der Temperatur T aufgetragen ist, bis zu einem Maximalwert an, der bei

der Temperatur $T_{m6}$ erreicht wird. Bis zur Curie-Temperatur $T_{c6}$ fällt die Magnetisierung anschließend wieder auf Null ab. Eine derartige Magnetisierungskennlinie hat beispielsweise Terbium-Eisen-Kobalt TbFeCo mit einem vorbestimmten Anteil an Terbium.

Soll in einem Datenspeichersystem mit einer Steuerschicht 6 gemäß Figur 11 beispielsweise ein O-Signal eingeschrieben werden, so wird gemäß dem Diagramm der Figur 12, in dem die Temperatur T über dem Abstand x aufgetragen ist, die Speicherschicht 2 durch einen Laserstrahl über ihre kritische Temperatur $T_{Kr2}$ und oberhalb der Temperatur $T_{M2}$ maximaler Magnetisierung erwärmt. Im Abstand $x_5$ bis $x_8$ kühlt sich die Speicherschicht 2 ab im Bereich mit gewünschter Feldrichtung. Im Abtand $x_7$ durchläuft sie ihre kritische Temperatur $T_{Kr2}$, so daß die in diesem Abstand eingeprägte Magnetisierung dort fixiert wird.

Gemäß Figur 13, in der die Raumladung $\rho$ in der Steuerschicht 6 sowie deren Magnetisierung M über dem Abstand x vom einfallenden Laserstrahl bei $x_0$ in einem Diagramm aufgetragen ist, steigt die Magnetisierung $M_{S6}$ in der Steuerschicht 6 vom Ort $x_0$ bis $x_4$ an bis zu einem Maximalwert $M_{6max}$ am Ort $x_4$. Die Magnetisierungskennlinie $M_{S6}$ hat dann einen Wendepunkt und erreicht wieder einen Wendepunkt am Ort $x_5$ und steigt dann wieder an, bis sie am Ort $x_6$ wieder maximale Magnetisierung $M_{6max}$ erreicht. Anschließend fällt die Magnetisierung $M_{x6}$ wieder ab. Der Absolutwert der Raumladung $|\rho_6|$ hat einen Maximalwert während des Anstiegs der Magnetisierung von $x_0$ bis $x_4$, geht dann bei $x_5$ und $x_6$ jeweils durch Null und erreicht am Ort $x_7$ einen großen Wert mit umgekehrter Polung. Diese große positive Raumladung am Ort $x_7$ kippt die Dipole im schreibfähigen Bereich der Speicherschicht 2 in eine vorbestimmte Richtung und diese Dipolverteilung wird in der Speicherschicht 2 fixiert, da gemäß Figur 12 bei $x_7$ die Temperatur $T_2$ in der Speicherschicht 2 ihre kritische Temperatur $T_{Kr2}$ erreicht.

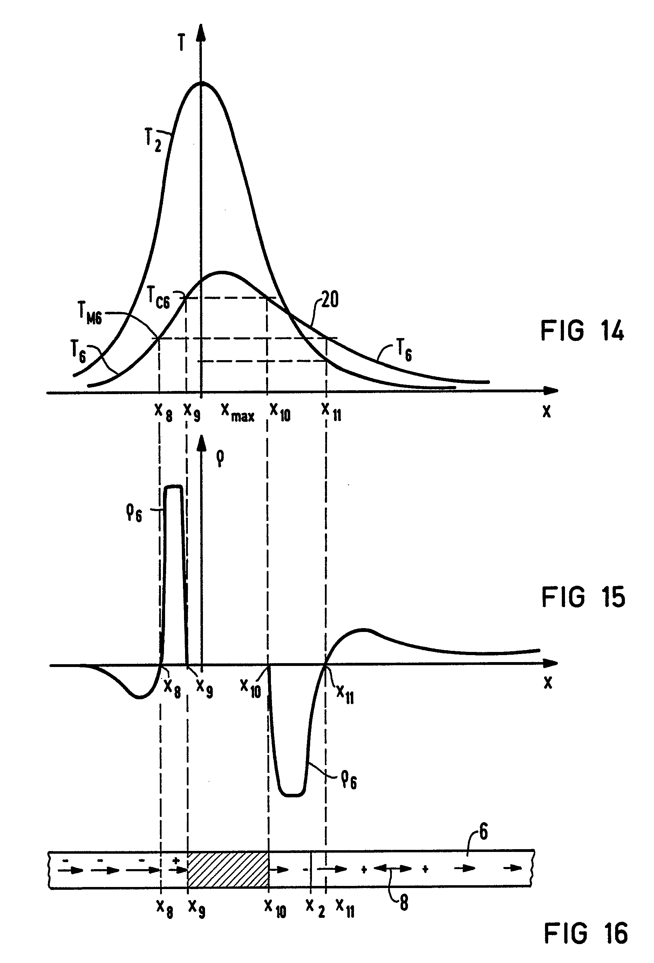

Zum Einschreiben eines I-Signals gemäß dem Diagramm der Figur 14 wird die Laserleistung beispielsweise auf ihre dritte Stufe erhöht und damit die Speicherschicht 2 auf eine Temperatur $T_2$ erhöht, die wesentlich größer ist als die Curie-Temperatur $T_{c6}$ der Steuerschicht 6. Am Ort $x_8$ erreicht die Temperatur $T_6$ der Steuerschicht 6 ihren Wert $T_{M6}$ maximaler Magnetisierung und am Ort $x_9$ wird die Curie-Temperatur $T_{c6}$ der Steuerschicht 6 überschritten. Mit ihrer Abkühlung erreicht die Steuerschicht 6 am Ort $x_{10}$ die Curie-Temperatur $T_{c6}$ und nach dem Ladungsfenster 20 am Ort $x_{11}$ die Temperatur $_{M6}$ maximaler Magnetisierung.

Im Ortsbereich von $x_8$ bis $x_9$ ergibt gemäß dem Diagramm der Figur 15, in dem die Ladungsverteilung $\rho$ über dem Abstand x aufgetragen ist,

eine positive Ladung $\rho_6$, die zur Umschaltung der Dipole in der Speicherschicht 2 nicht verwendet wird. Diese positive Ladung ist in Figur 16 im Bereich von $x_8$ bis $x_9$ mit + bezeichnet. Im Bereich von $x_9$ bis $x_{10}$ befindet sich gemäß Figur 14 die Steuerschicht 6 oberhalb ihrer Curie-Temperatur $T_{c6}$ und ist paramagnetisch, was in Figur 16 durch eine Schraffur angedeutet ist. Im Abstand $x_{10}$ erreicht die Steuerschicht 6 gemäß Figur 14 ihre Curie-Temperatur und es wird gemäß Figur 15 zwischen den Orten $x_{10}$ und $x_{11}$ mit einer Ladung $\rho_6$ mit negativem Vorzeichen ein Ladungsfenster gebildet. Diese entgegengesetzte Ladung ist in der Steuerschicht 6 gemäß Figur 16 mit - bezeichnet. Am Ort $x_2$ wird die kritische Temperatur der Speicherschicht 2 durchlaufen und die vertikale Komponente des Magnetfeldes der Steuerschicht 6 in diesem Ortsbereich von $x_{10}$ bis $x_{11}$ bestimmt die Richtung der Dipole in der Steuerschicht 2.

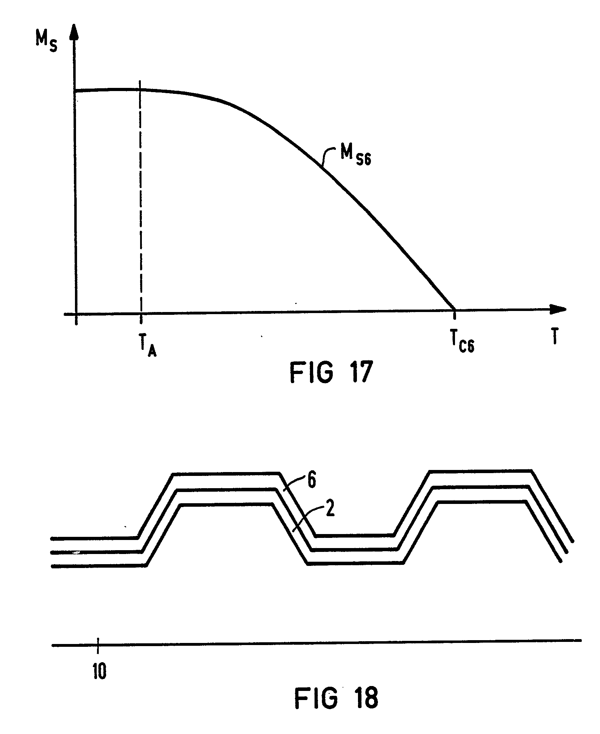

Im Diagramm gemäß Figur 17 ist die Sättigungsmagnetisierung $M_S$ über der Temperatur T für ein Material der Steuerschicht 6 aufgetragen. Die Magnetisierungskennlinie $M_{S6}$ fällt oberhalb der Raumtemperatur $T_A$ ab bis zur Curie-Temperatur $T_{c6}$. Eine Steuerschicht 6 mit diesem Material, beispielsweise Neodym-Eisen-Kobalt NdFeCo, hat bei geringer Temperatur eine hohe Magnetisie rung und eine genügend große magnetische Anisotropie K. Bei einem System mit diesem Material kühlt beim Einschreiben eines I-Signals die Speicherschicht 2 bis unterhalb seiner kritischen Temperatur $T_{Kr}$ ab im Ortsbereich, wo die Steuerschicht noch paramagnetisch ist. Dieses System weist größere Toleranzfenster auf.

Unter Umständen kann es zweckmäßig sein, anstatt der Grundfeldquelle oder gegebenenfalls außer der Grundfeldquelle noch eine zusätzliche Magnetfeldquelle vorzusehen, die in der Steuerschicht 6 außerhalb des Schreibbereiches ein Magnetfeld parallel zu den Flachseiten der Steuerschicht und wenigstens annähernd in Richtung der Datenspuren erzeugt. Dieses Magnetfeld wirkt einer Ausbreitung von Abweichungen des Magnetisierungsmusters, insbesondere von Fehlerstellen, entgegen.

Zum Herstellen der Ausführungsform einer Speicherplatte mit einer Mehrschichtstruktur gemäß der Erfindung, bei der die Plattenoberfläche mit einer Rillenstruktur gemäß Figur 18 versehen ist, werden nacheinander die Speicherschicht 2 und die Steuerschicht 6 auf das Substrat 10 aufgebracht, beispielsweise auf die mit entsprechenden Rillen versehene Oberfläche des Substrats 10 aufgesputtert. In dieser Ausführungsform wird als Steuerschicht 6 vorzugsweise ein Material einem positiven Magnetostriktionskoeffizienten $\lambda$ gewählt. Damit bleibt nach dem Abkühlen der Mehrschichtstruktur nach der Beschichtung in Längsrichtung der Rillen eine Zugspannung erhalten, während an den Rändern der Rillen die mechanischen Spannungen senkrecht zu den Rillen sich aufheben. Wegen der magnetoelastischen Kopplung bildet sich entlang der Ränder eine Vorzugsachse für die Magnetisierung aus. In der Mitte der Spur ist diese Anisotropie geringer, aber die magnetostatische Kopplung gewährleistet auch hier die gewünschte Ausbildung der leichten magnetischen Achse.

Zum Herstellen der Steuerschicht 6 mit ihrer leichten magneti schen Achse in Längsrichtung der Datenspuren, gegebenenfalls auch in einer Ausführungsform ohne Spurrillen, kann auch beim Aufwachsen der Steuerschicht oder auch während einer zusätzlichen Wärmebehandlung nach der Beschichtung ein Magnetfeld angelegt werden, das in der Plattenebene liegt und entweder in der Spurrichtung oder quer zur Datenspur gerichtet ist.

In einer besonderen Ausführungsform des Datenspeichersystems können auch zwei Speicherschichten vorgesehen sein, zwischen denen eine gemeinsame Steuerschicht angeordnet ist. Diese Schichten werden zweckmäßig auf ein gemeinsames Substrat aufgebracht, beispielsweise aufgedampft oder aufgesputtert. Diese Doppelausführung des Systems hat den Vorteil, daß sich eine Verdopplung der Speicherdichte ergibt.

## Ansprüche

1. Datenspeichersystem mit thermisch direkt überschreibbarer Information, bei dem das Auslesen und Überschreiben der Information durch fokussierbare und in Wärmeenergie umwandelbare Strahlung einer Strahlungsquelle mit steuerbarer Intensität in Bereichen mit veränderbarer Magnetisierungsrichtung erfolgt und das eine bewegbare Mehrschichtstruktur mit mindestens einer magnetischen Speicherschicht und einer magnetischen Steuerschicht enthält, **gekennzeichnet** durch folgende Merkmale:

a) es ist mindestens eine Steuerschicht (6) vorgesehen, deren Magnetisierung parallel zu ihren Flachseiten in Richtung der Relativbewegung zwischen Strahlungsquelle (14) und Mehrschichtstruktur (1) verläuft,

b) diese Steuerschicht (6) hat eine von der Speicherschicht (2) abweichende Wärmeleitung,

c) es ist eine Speicherschicht (2) vorgesehen, die ein Material mit einem oder mehreren Untergittern mit einer vorbestimmten Dipolverteilung enthält,

d) die Richtung der Dipole ist durch ein Magnetfeld veränderbar,

e) Aufbau und Bemessung der Steuerschicht (6) und die Relativgeschwindigkeit v zwischen der Strahlungsquelle (14) und der Mehrschichtstruktur (1) beim Einschreiben einer Information sind so gewählt, daß die Temperaturverteilungen innerhalb der Speicherschicht (2) und der Steuerschicht (6) sich dermaßen unterscheiden, daß abhängig von dem Leistungsverlauf der Strahlungsquelle (14) in einem Ladungsfenster (20) im Abkühlbereich der Steuerschicht (6) eine vorbestimmte Ladung erzeugt wird, deren Magnetfeld in einem Teil des zugeordneten Bereiches ($x_1$ bis $x_3$) der Speicherschicht (2), in dem die aufgeprägte Dipolrichtung in der Speicherschicht (2) fixiert wird, die Richtung der Dipole in den Untergittern auf vorbestimmte Weise beeinflußt (Fig. 1, 4 und 5).

2. Datenspeichersystem nach Anspruch 1, **dadurch gekennzeichnet,** daß die Steuerschicht (6) aus Terbium-Eisen-Kobalt TbFeCo besteht.

3. Datenspeichersystem nach Anspruch 2, **dadurch gekennzeichnet,** daß die Steuerschicht (6) aus Dysprosium-Eisen-Kobalt DyFeCo besteht.

4. Datenspeichersystem nach einem der Ansprüche 1 bis 3, **dadurch gekennzeichnet,** daß die Steuerschicht (6) aus Dysprosium-Teberium-Eisen-Kobalt DyTbFeCo besteht.

5. Datenspeichersystem nach einem der Ansprüche 1 bis 4, **dadurch gekennnzeichnet,** daß die Steuerschicht (6) aus Terbium-Eisen-Kobalt TbFeCo besteht.

6. Datenspeichersystem nach Anspruch 1, **dadurch gekennzeichnet,** daß die Steuerschicht (6) aus Samarium-Kobalt SmCo besteht.

7. Datenspeichersystem nach einem der Ansprüche 1 bis 6, **dadurch gekennzeichnet,** daß die leichte Achse der Magnetisierung der Steuerschicht (6) parallel zu den Flachseiten der Steuerschicht (6) und in der Bewegungsrichtung der Mehrschichtstruktur (1) verläuft.

8. Datenspeichersystem nach einem der Ansprüche 1 bis 7, **gekennzeichnet** durch zwei Speicherschichten, die durch eine Steuerschicht getrennt sind und denen ein gemeinsames Substrat zugeordnet ist.

9. Datenspeichersystem nach einem der Ansprüche 1 bis 8, **dadurch gekennzeichnet,** daß die Steuerschicht aus einer Magnetschicht (5) und mindestens einer Wärmeverteilungsschicht (4) besteht (Figur 6).

10. Datenspeichersystem nach Anspruch 9, **dadurch gekennzeichnet,** daß die Wärmeverteilungsschicht (4) aus Selen Se besteht.

11. Datenspeichersystem nach Anspruch 9, **dadurch gekennzeichnet,** daß die Wärmeverteilungsschicht (4) aus Aluminiumnitrid $Al_3N_4$ besteht.

12. Datenspeichersystem nach Anspruch 9, **dadurch gekennzeichnet,** daß die Wärmeverteilungsschicht (4) aus einem Material mit hoher Wärmeleitfähigkeit besteht.

13. Datenspeichersystem nach Anspruch 12, **dadurch gekennzeichnet,** daß die Wärmeverteilungsschicht (4) aus Metall besteht.

14. Datenspeichersystem nach Anspruch 12, **dadurch gekennzeichnet,** daß die Wärmeverteilungsschicht (4) aus Kupfer Cu besteht.

15. Datenspeichersystem nach einem der Ansprüche 1 bis 14, **gekennzeichnet** durch eine Wärmeverteilungsschicht (4) aus einem Mehrschichtsystem mit wenigstens einer Schicht mit geringer und wenigstens einer Schicht mit hoher Wärmeleitfähigkeit.

16. Datenspeichersystem nach einem der Ansprüche 1 bis 15, **dadurch gekennzeichnet,** daß die Wärmeverteilungsschicht (4) zwischen der Speicherschicht (2) und der Magnetschicht (5) angeordnet ist.

17. Datenspeichersystem nach einem der Ansprüche 1 bis 15, **dadurch gekennzeichnet,** daß die Wärmeverteilungsschicht (4) an der von der Speicherschicht (2) abgewandten Flachseite der Magnetschicht (5) angeordnet ist.

18. Datenspeichersystem nach einem der Ansprüche 1 bis 15, **gekennzeichnet** durch eine Doppelschicht der Wärmeverteilungsschicht, von denen jeweils eine an einer der Flachseiten der Magnetschicht (5) angeordnet ist.

19. Datenspeichersystem nach einem der Ansprüche 1 bis 18, **gekennzeichnet** durch eine Steuerschicht (6) aus einem Material, dessen Magnetisierungskennlinie $M_{S6} = f(T)$ aus einem relativ flachen Teil besteht oderhalb der Raumtemperatur $T_A$ und einem steilen Abfall oberhalb der Knicktemperatur $T_{E6}$ (Figur 2).

20. Datenspeichersystem nach einem der Ansprüche 1 bis 18, **gekennzeichnet** durch eine Steuerschicht (6) aus einem Material, dessen Magnetisierungskennlinie $M_{S6} = f(T)$ oberhalb Raumtemperatur $T_A$ abklingt (Figur 17).

21. Datenspeichersystem nach einem der Ansprüche 1 bis 18, **gekennzeichnet** durch eine Steuerschicht (6) aus einem Material, dessen Kompensationstemperatur $T_K$ dicht unter der Raumtemperatur $T_A$ liegt (Figur 10).

22. Datenspeichersystem nach einem der Ansprüche 1 bis 21, **gekennzeichnet** durch eine Grundfeldquelle.

23. Datenspeichersystem nach einem der Ansprüche 1 bis 22, **dadurch gekennzeichnet,** daß die Mehrschichtstruktur (1) mit einer Rillenstruktur versehen ist, durch die mit Hilfe einer magnetoelastischen Kopplung eine leichte Achse der Magnetisierung erzeugt wird.

24. Datenspeichersystem nach einem der Ansprüche 1 bis 23, **gekennzeichnet** durch eine zusätzliche Magnetfeldquelle mit großer Feldkomponente in der Ebene.

25. Datenspeichersystem nach einem der Ansprüche 1 bis 24, **gekennzeichnet** durch eine Doppelausführung des Datenspeichersystems mit zwei Speicherschichten, zwischen denen eine Steuerschicht angeordnet ist, und die auf einem gemeinsamen Substrat angeordnet sind.

26. Verfahren zum Herstellen eines Datenspeichersystems nach einem der Ansprüche 1 bis 23, **dadurch gekennzeichnet,** daß die leichte Achse der Magnetisierungsschicht dadurch erzeugt wird, daß während der Herstellung der Steuerschicht ein Magnetfeld in der Relativbewegungsrichtung der Mehrschichtstruktur (1) oder senkrecht zur Bewegungsrichtung angelegt wird.

FIG 1

FIG 4

FIG 5

FIG 6

FIG 7

EP 0 336 237 A2

FIG 2

FIG 3

FIG 8

FIG 9

FIG 10

FIG 11

FIG 12

FIG 13

FIG 14

FIG 15

FIG 16

FIG 17

FIG 18